# EUROPÄISCHE PATENTSCHRIFT

(11) **EP 3 152 017 B1**
(45) Veröffentlichungstag und Bekanntmachung des Hinweises auf die Patenterteilung: **07.10.2020**
(21) Anmeldenummer: 15725550.6
(22) Anmeldetag: 19.05.2015
(51) Int. Cl.: B27M 1/08, B23Q 11/00, B27G 21/00, B23Q 17/24, F16P 3/14

(54) **VERFAHREN ZUM BETREIBEN EINER PLATTENBEARBEITUNGSANLAGE, SOWIE PLATTENBEARBEITUNGSANLAGE**
METHOD FOR OPERATING A PANEL-PROCESSING INSTALLATION, AND PANEL-PROCESSING INSTALLATION
PROCÉDÉ PERMETTANT DE FAIRE FONCTIONNER UNE INSTALLATION D'USINAGE DE PANNEAUX, ET INSTALLATION D'USINAGE DE PANNEAUX

(30) Priorität: 04.06.2014 DE 102014210612
(43) Veröffentlichungstag der Anmeldung: 12.04.2017
(73) Patentinhaber: HOMAG Plattenaufteiltechnik GmbH, 75365 Calw (DE)
(72) Erfinder: ELHAUS, Uwe, 75365 Calw (DE); ZIMBAKOV, Darko, 71155 Altdorf (DE); MARTYNENKO, Sergey, 71083 Herrenberg (DE); FRIEBOLIN, Manuel, 75365 Calw (DE)
(74) Vertreter: DREISS Patentanwälte PartG mbB
(86) Internationale Anmeldenummer: PCT/EP2015/060932
(87) Internationale Veröffentlichungsnummer: WO 2015/185351

(56) Entgegenhaltungen:
- EP-A2- 1 918 629
- WO-A1-2009/155948
- WO-A1-2013/135608
- DE-A1-102007 041 097
- DE-U1-202009 007 035
- US-A1- 2007 085 502

## Beschreibung

Die Erfindung betrifft ein Verfahren zum Betreiben einer Plattenbearbeitungsanlage nach dem Oberbegriff des Anspruchs 1, sowie eine Plattenbearbeitungsanlage nach dem Oberbegriff des nebengeordneten Patentanspruchs.

DE 10 2009 038 120 A1 beschreibt eine Plattenbearbeitungsanlage in Form einer Plattenaufteilanlage zum Aufteilen großformatige Platten, beispielsweise für die Möbelindustrie. Hierzu verfügt die Plattenaufteilanlage über einen Programmschieber, der einer Aufteilsäge Platten zum Aufteilen zuführt. An einem Entnahmetisch steht eine Bedienperson und führt die Platten dem Programmschieber zu und entnimmt die aufgeteilten Platten. Über eine Anzeige- und Eingabevorrichtung kann die Bedienperson den Ablauf des Aufteilverfahrens steuern, beispielsweise Schnittpläne eingeben. DE 10 2008 014 869 A1 offenbart eine Plattenaufteilanlage, bei der ein im Bereich des Entnahmetisches vorhandenes Werkstück von einer Erfassungseinrichtung erfasst wird und bei der eine Handhabungsinformation an die Bedienperson abhängig von den erfassten Daten ausgegeben werden. DE 10 2010 017 857 A1 betrifft eine 3D-Sicherheitsvorrichtung zur Absicherung und Bedienung einer Maschine. Die Bedienung der Maschine kann durch die Bedienperson mittels Gesten erfolgen. Ein weiteres Bespiel für eine Plattenaufteilanlage findet sich in der DE 10 2008 034 050 A1. DE 10 2007 041 097 A1 offenbart eine Vorrichtung zum Überwachen einer Werkzeugmaschine mit einer Erkennungseinheit zur Erkennung einer Anwendungssituation, insbesondere einer unvorhergesehenen bzw. unkontrollierten Bewegung eines Werkstücks. Die Bewegung wird anhand wenigstens einer Abstandskenngröße erkennt. Die EP 1 918 629 A2 betrifft eine Bearbeitungsmaschine, bei der eine Kamera die Anwesenheit eines Gegenstands beispielsweise auf der Grundlage eines Soll-/Ist-Vergleichs beurteilt. Die DE 20 2009 007 035 1 beschreibt eine Bearbeitungsmaschine mit einem Sicherheitsscanner, bei dem ebenfalls eine Kamera die Anwesenheit eines Gegenstands beurteilt. Die WO 2009/155948 A1 betrifft eine Maschinenüberwachung, bei der ebenfalls eine Bilderkennung eingesetzt wird, um gefährliche Anlagenzustände zu erkennen. Die WO 2013/135608 A1 beschreibt ein Verfahren und eine Vorrichtung zum Absichern eines gefährlichen Arbeitsbereichs einer automatisiert arbeitenden Maschine. Bei der US 2007/0085502 A1 geht es um ein Bremssystem.

Es wurde erkannt, dass die Sicherheit und Zuverlässigkeit im Betrieb der Plattenbearbeitungsanlage noch verbessert werden kann. Hiervon ausgehend stellt sich die vorliegende Erfindung die Aufgabe, ein Verfahren der eingangs genannten Art zu schaffen, mit dem eine Plattenbearbeitungsanlage besonders sicher und zuverlässig betrieben werden kann.

Diese Aufgabe wird durch ein Verfahren mit den Merkmalen des Anspruchs 1 und eine Plattenbearbeitungsanlage mit den Merkmalen des nebengeordneten Patentanspruchs gelöst. Weiterbildungen der Erfindung sind in den Unteransprüchen angegeben. Weitere Merkmale der Erfindung sind aus den Figuren und der Figurenbeschreibung ersichtlich, wobei die Merkmale sowohl in Alleinstellung als auch in beliebigen Kombinationen für die Erfindung wesentlich sein können.

Die Erfindung zeichnet sich dadurch aus, dass mittels mindestens einer ersten Erfassungseinrichtung ein Beobachtungsbereich der Plattenbearbeitungsanlage beobachtet wird, und dass mittels der ersten Erfassungseinrichtung eine Größe, die für den sicheren Betrieb der Plattenbearbeitungsanlage und/oder einen Bearbeitungsprozess (bspw. einen Aufteilprozess) relevant ist, ermittelt wird, aus der ermittelten Größe auf das Vorliegen einer für die Sicherheit und die Zuverlässigkeit im Betrieb der Plattenbearbeitungsanlage relevanten Situation geschlossen wird, und abhängig von der Situation eine Aktion erfolgt.

Erfindungsgemäß wird ein Beobachtungsbereich der Plattenbearbeitungsanlage von einer automatischen ersten Erfassungseinrichtung selbstständig beobachtet und durch eine entsprechende und üblicherweise mikroprozessorgestützte Auswerteeinrichtung auf der Basis der ermittelten Größe eine Situation definiert, die aktuell in oder bei der Maschine vorliegt. Es wird dann abhängig von der definierten Situation von der Auswerteeinrichtung entschieden, ob die definierte Situation eine Aktion rechtfertigt oder sogar erforderlich macht, und, wenn ja, welche Aktion erfolgen soll. Auf diese Weise kann ohne menschliches Zutun und somit jederzeit die Plattenbearbeitungsanlage sehr sicher und zuverlässig betrieben werden. Insbesondere wird die Betriebszuverlässigkeit und somit das Arbeitsergebnis und die Arbeitsleistung der Plattenbearbeitungsanlage verbessert.

Weiterhin wird die Prozesssicherheit der Plattenaufteilanlage insbesondere bei der Fortsetzung des unterbrochenen Programmablaufs oder beim Start der Anlage nach einem ungeplanten Ereignis oder nach der Fehlerbehebung verbessert. Der Betrieb der Anlage bzw. Abweichungen von einem Programmablauf und/oder Abweichungen von einem vorgesehenen Materialfluss können von der Erfassungseinrichtung und der Steuer- und Regeleinrichtung frühzeitig erkannt werden, und Gegenmaßnahmen können frühzeitig eingeleitet werden. Damit können schwerwiegenden Folgen von Materialflussstörungen, beispielsweise eine Materialkollision oder ein Maschinenschaden besonders bei solchen Anlagen mit automatischem Werkstücktransport vermieden werden.

Dabei wird vorgeschlagen, dass die Größe, die für den sicheren Betrieb der Plattenbearbeitungsanlage, also auch einen störungsfreien Materialfluss relevant ist, mindestens eine aus der folgenden Gruppe ist: Vorhandensein von sicherheitsrelevanten Bauteilen; Beschädigungen an sicherheitsrelevanten Bauteilen; Vorhandensein und Position von materialflussrelevanten Bauteilen; Beschädigungen an materialflussrelevanten Bauteilen; Identität, Größe, Position, Geschwindigkeit, Bewegungsrichtung, Beschleunigung eines Werkstücks; Betriebsgeräusch der Plattenbearbeitungsanlage. Ebenso ist die Beobachtung von materialflussrelevanten Bauteilen und von Werkstücken für einen solchen besonders sicheren Betrieb wichtig.

Fehlen sicherheitsrelevante Bauteile, ist die Sicherheit der Bedienperson nicht mehr gewährleistet. Hierzu kann beispielsweise gehören, dass eine Absperrung um die Anlage nicht mehr intakt ist, oder dass ein Lamellenvorhang, der einen Handlingbereich von einer Sägelinie trennt, beschädigt ist, indem beispielsweise eine Lamelle fehlt-

Bei den von der Erfassungseinrichtung erkannten Störungen im Materialfluss, insbesondere beim automatischen Materialtransport in der Plattenaufteilanlage (z.B. ein beim Transport verdrehtes Werkstück, ein nicht entsorgtes Abfall-Werkstück, welches im Bereich der Bearbeitungseinrichtung liegt, oder ein im Bereich der Bearbeitungseinrichtung liegendes Anschnitt-Werkstück) wird die Produktion in der Plattenaufteilanlage unterbrochen und die Bedienperson über den aufgetretenen Fehler bzw. die Störung informiert.

Bei einer Fortsetzung des Programmablaufs z.B. nach einer Störung wird von der ersten Erfassungseinrichtung eine aktuelle Position des Werkstücks oder der Werkstücke in einem Transport- und/oder Handlingbereich erfasst, und es werden Positionen bzw. Zustände von für den Materialtransport relevanten Baugruppen (z.B. Vorschubeinrichtung, Querübergabeeinrichtung, Ausrichteinrichtung) erfasst und mit gewünschten bzw. vorgegebenen Positionen bzw. mit dem Abarbeitungsgrad des aktuellen Schnittplans verglichen. Gegebenenfalls wird der Ablauf in der Plattenaufteilanlage angepasst, und beschädigte oder ein bei der Behebung der Störung herausgenommenes Werkstück nachproduziert. Wird festgestellt, dass sich ein Werkstück auf einer nicht vorgesehenen Position befindet, was dann bei der Fortsetzung des Betriebs der Plattenaufteilanlage zu einer Kollision mit einem anderen Werkstück führen kann, wird automatisch eine Änderung des Programmablaufs durchgeführt und/oder ein Hinweis an die Bedienperson ausgegeben, um eine drohende Kollision zu vermeiden.

Erkannt werden kann von der ersten Erfassungseinrichtung auch, ob die Gefahr besteht, dass ein Werkstück herunterfällt oder sich in einer solchen Lage oder Ausrichtung befindet, dass die Gefahr besteht, dass es bei einem weiteren Betrieb der Plattenbearbeitungsanlage beschädigt wird oder dass die Plattenbearbeitungsanlage bei einem weiteren Betrieb von dem Werkstück beschädigt wird. Auch andere Teile, die nicht Werkstücke sind (beispielsweise eine Trinkflasche) und sich an Stellen der Plattenbearbeitungsanlage befinden, wo sie durch ihr Vorhandensein den sicheren Betrieb der Plattenbearbeitungsanlage gefährden, werden von der ersten Erfassungseinrichtung erkannt, und es wird eine entsprechende Aktion ausgelöst.

Ferner wird vorgeschlagen, dass die Aktion mindestens eine aus der folgenden Gruppe ist: Anfahren der Anlage; Beschleunigen der Anlage; Verlangsamen der Anlage; Anhalten der Anlage; Ausgabe einer Warninformation; Ausgabe eines Alarms; Ausgabe einer Instruktion an die Bedienperson, bspw. zum Ausrichten eines Werkstücks; Anpassen einer Maschinengeometrie, Anpassen eines Programmablaufs, bspw. Entsorgen eines beschädigten Werkstücks und Nachproduzieren des entsorgten Werkstücks, oder Änderung des Schnittplans. Mit diesen Aktionen, die gegebenenfalls auch in beliebigen Kombinationen oder in einer bestimmten Sequenz durchgeführt werden können, kann besonders gut auf eine erfasste Situation reagiert werden. Dabei kann die Warninformation oder der Alarm beispielsweise akustisch durch ein Signal oder auch durch eine Sprachausgabe ausgegeben werden, und/oder visuell durch ein Signallicht oder Text oder Symbole an einem Bildschirm oder über einen Beamer oder eine Laseranzeigeeinrichtung.

Eine entsprechende Situation kann sein, dass sich eine Person in einem gesperrten Bereich befindet, oder dass eine Unfallsituation erkannt wurde, oder dass sich ein Werkstück in einem Kollisionsbereich befindet oder eine gewünschte bzw. vorgegebene Position nicht erreicht hat, oder dass ein Abfall-Werkstück im Bereich der Bearbeitungseinrichtung nicht aufgeräumt ist. Die Anpassung der Maschinengeometrie kann beispielsweise umfassen, dass ein Entnahmetisch oder Abstapeltisch in eine bestimmte Position gebracht wird. Dies kann beispielsweise abhängig von der festgestellten Identität der Person sein, wie bereits oben erwähnt wurde.

Die erste Erfassungseinrichtung erfasst und erkennt Bilder und/oder erfasst und erkennt Geräusche. Insoweit kann die Erfassungseinrichtung beispielsweise eine Kamera mit integrierter oder nachgeschalteter Bilderkennungs- und Bildauswertefunktion sein, oder ein Mikrofon mit integrierter oder nachgeschalteter Geräuscherkennungs- und Geräuschauswertefunktion sein. Derartige Erfassungseinrichtungen sind preiswert und arbeiten zuverlässig. Die erste Erfassungsvorrichtung kann beispielweise ein in eine Steuer- und/oder Regeleinrichtung der Plattenaufteilanlage integriertes System für eine berührungslose Ortung und Identifizierung einer Bedienperson umfassen, wobei die Bedienperson beispielsweise einen Transponder trägt und an der Plattenbearbeitungsanlage mehrere Empfänger installiert sind.

Eine andere Weiterbildung der Erfindung sieht vor, dass das Vorliegen der Situation anhand mindestens einer zweiten und bezüglich des Funktionsprinzips von der ersten Erfassungseinrichtung unterschiedlichen Erfassungseinrichtung überprüft wird, was die Zuverlässigkeit der Situationserkennung verbessert und beispielsweise unnötige Maschinenstopps zu vermeiden hilft.

Hierzu gehört, dass die zweite Erfassungseinrichtung Maschinenzustände erfasst, beispielsweise mittels Informationen, die von Lagesensoren, Endschaltern, Wegaufnehmern, Leistungsmesseinrichtungen, etc. geliefert werden. Diese sind üblicherweise ohnehin vorhanden, sodass zur Realisierung dieser Funktionalität kein großer zusatzaufwand getrieben werden muss.

Die Situation kann aus einer Gruppe von vordefinierten Situationen ausgewählt sein, wobei die Gruppe mindestens umfasst: Sicherheitseinrichtung fehlt oder ist schadhaft; Plattenbearbeitungsanlage ist defekt; eine Baugruppe der Anlage befindet sich nicht in der an sich erforderlichen vorgegebenen Position (z.B. eine Vorschubeinheit oder ein Ausrichter wurde beim Beheben des Fehlers manuell verschoben); es ist keine zum Maschinenbedienen autorisierte Person anwesend; ein Werkstück befindet sich in einem Vorschub- bzw. Transportbereich oder in einem Handlingbereich in einer Soll-Position und es liegt keine Störungen des Materialflusses vor; es liegt eine Kollisionssituation vor; es befindet sich ein störender Gegenstand im Transportbereich; ein erfasstes Werkstück ist beschädigt und muss entsorgt und nachproduziert werden; eine Voraussetzung für eine Fortsetzung eines unterbrochenen Programmablaufs liegt nicht vor.. Die Vordefinition bestimmter Situationen erleichtert die softwaretechnische Realisierung des erfindungsgemäßen Verfahrens. Die angegebene Liste der möglichen vordefinierten Situationen berücksichtigt die wesentlichen zu erwartenden und für die Sicherheit und die Zuverlässigkeit im Betrieb der Plattenbearbeitungsanlage relevanten Situationen. Es sei jedoch an dieser Stelle darauf hingewiesen, dass die angegebene Liste der möglichen Situationen keineswegs abschließend ist und eine beinahe beliebige Anzahl von Situationen umfassen kann, die im Betrieb einer Plattenbearbeitungsanlage denkbar sind.

Die Zeichnung zeigen Beispiele der Erfindung. In der Zeichnung zeigen:
Figur 1 eine perspektivische Darstellung einer ersten Ausführungsform einer Plattenaufteilanlage;
Figur 2 eine schematische Draufsicht auf eine zweite Ausführungsform einer Plattenaufteilanlage, die als Winkelanlage ausgeführt ist; und
Figur 3 ein Blockschaltbild eines Verfahrens zum Betreiben der Plattenbearbeitungsanlage von Figur 1.

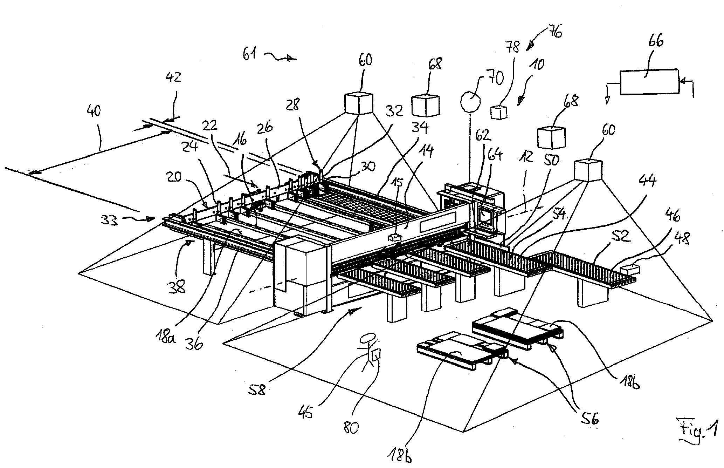

Eine Plattenbearbeitungsanlage in Form einer Plattenaufteilsäge trägt in Figur 1 insgesamt das Bezugszeichen 10. Sie umfasst als Aufteileinrichtung eine Säge, welche in Figur 1 jedoch nicht dargestellt ist. Lediglich die Aufteil- bzw. Sägelinie ist durch eine strichpunktierte Linie mit dem Bezugszeichen 12 angedeutet. Auch Aufteileinrichtungen mit anderen Trennverfahren kommen in Frage, beispielsweise eine Aufteileinrichtung mit einem Fräswerkzeug. Oberhalb der Sägelinie 12 ist ein Druckbalken 14 mit einem vorzugsweise automatischen Etikettiersystem 15, beispielsweise mit einem vorzugsweise beweglichen Etikettendrucker, vorhanden.

Zu der hier konkret gezeigten Plattenaufteilsäge 10 gehört ferner ein Auflagetisch 16, der beispielsweise durch eine Vielzahl von Rollen (nicht dargestellt) gebildet wird. Auf dem Auflagetisch 16 liegen bei der in Figur 1 dargestellten Ausgangskonfiguration der Plattenaufteilsäge 10 mehrere Stapel mit plattenförmigen Werkstücken 18a, wobei in Figur 1 aus Darstellungsgründen nur an einer Stelle ein entsprechendes Bezugszeichen verwendet wird. Die Werkstücke 18a können von einer ersten Vorschubeinrichtung 20 in Vorschubrichtung (Pfeil 22) und auch entgegen der Vorschubrichtung 22 bewegt werden, indem der Stapel von plattenförmigen Werkstücken 18a von ersten Greifeinrichtungen 24 gegriffen wird, von denen aus Darstellungsgründen wiederum nur eine mit einem Bezugszeichen versehen ist. Diese Greifeinrichtungen 24 sind an einem ersten Träger 26 angebracht.

Die Plattenaufteilsäge 10 umfasst ferner eine zweite Vorschubeinrichtung 28, die seitlich neben der ersten Vorschubeinrichtung 20 angeordnet ist. Die zweite Vorschubeinrichtung 28 umfasst einen zweiten Träger 30, an dem seitlich, zum Auflagetisch 16 hin, eine zweite Greifeinrichtung 32 befestigt ist. Die beiden Vorschubeinrichtungen 20 und 28 bilden insgesamt eine Fördereinrichtung 33.

Der zweite Träger 30 ist, wie weiter unten noch stärker im Detail erläutert werden wird, an der Unterseite eines dritten Trägers 34 befestigt, der sich parallel zur Vorschubrichtung 22 erstreckt und den Auflagetisch 16 seitlich begrenzt. Parallel zum dritten Träger 34 ist auf der anderen Seite des Auflagetisches 16 ein vierter Träger 36 vorhanden. Der erste Träger 26 ist in der Art eines Portals auf den Oberseiten des dritten Trägers 34 beziehungsweise des vierten Trägers 36 gelagert, wohingegen der zweite Träger 30 in der Art eines Schlittens an der Unterseite des dritten Trägers 34 gelagert ist.

Quer zur Vorschubrichtung 22 wird durch den Auflagetisch 16 und die beiden Träger 34 und 36 ein Vorschubbereich 38 definiert, in dem die von den Vorschubeinrichtungen 20 und 28 zu bewegenden Werkstücke 18a angeordnet werden können. Der Vorschubbereich 38 weist wiederum quer zur Vorschubrichtung 22 einen ersten Breitenbereich 40 und einen zweiten Breitenbereich 42 auf, die in Figur 1 durch entsprechende Breitenpfeile gekennzeichnet sind. Der erste Breitenbereich 40 ist dadurch definiert, dass in ihm die ersten Greifeinrichtungen 24 angeordnet sind, und der zweite Breitenbereich 42 ist dadurch definiert, dass in ihm die zweite Greifeinrichtung 32 angeordnet ist. Man erkennt aus Figur 1, dass der erste Breitenbereich 40 direkt an den zweiten Breitenbereich 42 angrenzt, mit diesem jedoch nicht überlappt.

Die in Figur 1 gezeigte Plattenaufteilsäge 10 weist auf der vom Auflagetisch 16 abgewandten Seite der Sägelinie 12 beziehungsweise des Druckbalkens 14 einen aus mehreren Einzeltischen bestehenden Entnahmetisch 44 auf. Wiederum aus Darstellungsgründen ist nur einer der Einzeltische mit einem Bezugszeichen versehen. Von diesem Entnahmetisch 44 können, wie weiter unten noch im Detail ausgeführt werden wird, die von der Säge aufgeteilten Werkstücke 18b von einer Bedienperson 45 der Plattenaufteilsäge 10 entnommen oder für eine weitere Aufteilung der ersten Vorschubeinrichtung 20 und/oder der zweiten Vorschubeinrichtung 28 erneut zugeführt werden.

Ferner verfügt die hier konkret gezeigte Plattenaufteilsäge 10 im Bereich des Auflagetisches 16 über einen nicht dargestellten Drehtisch sowie ebenfalls nicht dargestellte Ausrichtanschläge unter anderem am Druckbalken 14, die von einer abgesenkten Ruhestellung in eine angehobene Arbeitsposition und zurück bewegt werden können.

In Figur 1 rechts neben dem äußersten rechten Teil-Entnahmetisch 44 ist ein Puffertisch 46 mit einem Etikettiersystem 48, beispielsweise mit einem Etikettendrucker, angeordnet. An dem Entnahmetisch 44 ist ein sich parallel zur Vorschubrichtung 22 erstreckendes Winkellineal 50 angeordnet, welches fest mit dem Entnahmetisch 44 verbunden ist. Eine Oberseite 52 des Puffertisches 46 ist jederzeit bündig mit einer Oberseite 54 des Entnahmetisches 44. Der Puffertisch 46 ist bei der gezeigten Plattenaufteilsäge 10 relativ zu dem Entnahmetisch 44 versetzt angeordnet, so dass das Winkellineal 50 den Transport des aufgeteilten Werkstückes 18b nicht verhindert.

An seinem vom Entnahmetisch 44 fernliegenden Rand weist der Puffertisch 46 einen Anschlag in Form einer vertikal stehenden brettartigen Leiste auf, die jedoch nicht gezeichnet ist. Alternativ könnte anstelle oder zusätzlich zu der Leiste auch eine Röllchenleiste, eine bedüste Leiste oder eine Mehrzahl von Röllchenleisten angeordnet sein.

Hingewiesen sei noch darauf, dass sowohl der Entnahmetisch 44 als auch der Puffertisch 46 und auch das Winkellineal 50, wie bereits erwähnt wurde, als sogenannte "Luftkissentische" ausgeführt sind bzw. sein können. Diese weisen auf ihrer Oberseite eine Vielzahl von beispielsweise durch ein Kugelventil verschließbaren Luftdüsen auf. Liegt ein Werkstück auf einer solchen Luftdüse, wird die Kugel des Kugelventils durch das Gewicht des Werkstücks nach unten gedrückt, so dass Luft aus der Luftdüse ausströmen und zwischen Puffertisch 46 beziehungsweise Entnahmetisch 44 und dem Werkstück ein Luftkissen ausbilden kann. Durch eine Änderung des Luftstromes kann die Reibung zwischen dem Entnahmetisch 44 und den Werkstücken 18b und damit die Geschwindigkeit der Werkstücke 18b auf dem Luftkissen manuell oder automatisch gesteuert bzw. geregelt werden.

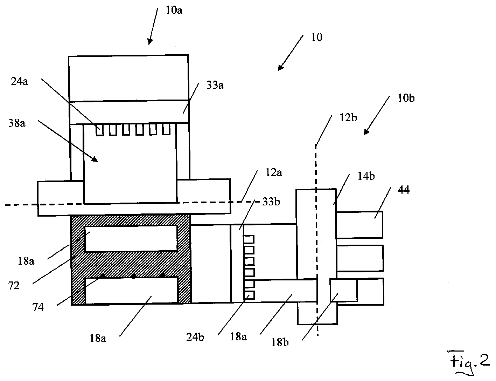

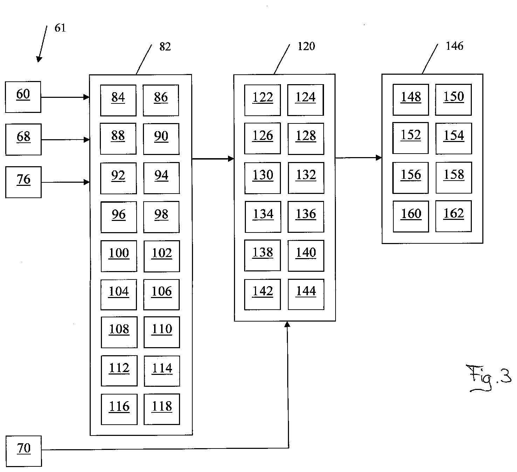

Die in Figur 2 lediglich schematisch dargestellte Plattenaufteilanlage 10 ist eine sog. "Winkelanlage", die aus zwei in einem Winkel von 90° zueinander und im Materialfluss nacheinander angeordneten Einzel-Aufteilanlagen 10a und 10b besteht, die jeweils ähnlich wie die in Figur 1 stärker im Detail gezeigte Plattenaufteilanlage 10 aufgebaut sind. Es werden in Figur 3 für funktionsäquivalente Bauteile, Elemente und Bereiche die gleichen Bezugszeichen wie in Figur 1 verwendet, wobei weniger der lediglich schematischen Darstellung deutlich weniger Teile gezeichnet sind. Die Bezugszeichen der Einzel-Aufteilanlage 10a sind mit dem Index "a", jene der Einzel-Aufteilanlage 10b mit dem Index "b" versehen. Mit der Einzel-Aufteilanlage 10a wird eine Längsaufteilung durchgeführt, mit der Einzel-Aufteilanlage 10b eine Queraufteilung. In einem Querübergabebereich 72 sind die beiden Einzel-Aufteilanlagen 10a und 10b miteinander verbunden. In diesem ist eine Ausrichteinrichtung 74 angeordnet, die die von der Einzel-Aufteilanlage 10a kommenden Plattenpakete ausrichtet, bevor sie von der Einzel-Plattenaufteilanlage 10b abtransportiert werden.

Die Plattenaufteilsäge 10 kann im Normalfall beispielsweise folgendermaßen arbeiten: Zunächst wird ein vergleichsweise großes plattenförmiges Werkstück 18a von der ersten Vorschubeinrichtung 20 der Säge zugeführt und in mehrere längliche, streifenartige Werkstücke aufgeteilt. Dies wird als "Längsaufteilung" bezeichnet. Die aufgeteilten streifenartigen Werkstücke werden dann von einer Bedienperson 45, die im Bereich des Entnahmetisches 44 steht, auf dem Entnahmetisch 44 um 90° gedreht und an dem Winkellineal 50 in Anlage gebracht.

Die beiden streifenförmigen Werkstücke werden von der Bedienperson 45 über die Sägelinie 12 hinweg in Richtung der beiden Vorschubeinrichtungen 20 und 28 geschoben, um von diesen ergriffen zu werden. Dabei sollen entsprechend einem vorgegebenen Bearbeitungs- bzw. Schnittplan die zweite Vorschubeinrichtung 28 das zum Winkellineal 50 benachbarte Werkstück und die erste Vorschubeinrichtung 20 das andere streifenförmige Werkstück greifen.

Nun werden beide streifenförmigen Werkstücke quer aufgeteilt. Dies wird als "Queraufteilung" bezeichnet. Da die Werkstücke Dabei wird ein automatisierter und von einer nicht gezeigten Steuer- und Regeleinrichtung gesteuerter Vorgang in Gang gesetzt, bei dem die beiden Vorschubeinrichtungen 20 und 28 die beiden streifenförmigen Werkstücke vom Entnahmetisch 44 entgegen der Vorschubrichtung 22 über die Sägelinie 12 hinweg vollständig auf den Auflagetisch 16 ziehen. Dort werden die beiden Werkstücke an einem dort im Bereich des dritten Trägers 34 vorhandenen seitlichen Winkellineal (nicht gezeigt) in Anlage gebracht und dann in Vorschubrichtung 22 der Säge zugeführt. Diese Zuführung geschieht dabei durch die erste Vorschubeinrichtung 20 unabhängig von der zweiten Vorschubeinrichtung 28, so dass am einen streifenförmigen Werkstück ein anderes Schnittbild realisiert werden kann als am anderen streifenförmigen Werkstück. Dieses Schnittbild wird durch entsprechende Sägeschnitte entlang der Sägelinie 12 realisiert.

Während dieses automatisierten Vorganges kann die Bedienperson 45 aufgeteilte Werkstücke 18b, welche auf dem Puffertisch 46 liegen und von einem vorhergehenden Sägevorgang stammen, vom Puffertisch 46 entnehmen und beispielsweise auf Abstapelplätze 56 abstapeln. Die Entnahmetische 44, das Winkellineal 50, der Puffertisch 46 und die Abstapelplätze 56 sind insgesamt Teil eines Handlingbereichs 58.

Bei der oben beschriebenen automatisierten Queraufteilung werden nun verschiedene kleine Einzelwerkstücke 18b erzeugt, die von den Vorschubeinrichtungen 20 und 28 auf den Entnahmetisch 44 geschoben werden. Die Einzelwerkstücke 18b haben ein Etikett, wobei die Etikettierung automatisch vor der Aufteilung (durch eine nicht dargestellte Flächenetikettierung) und/oder während der Aufteilung (mittels des automatischen Etikettendruckers 15) oder manuell nach der Aufteilung (mittels des Etikettendruckers 48) erfolgen kann. Ein Teil der auf diese Weise auf den Entnahmetisch 44 gelangenden Werkstücke 18b wird von der Bedienperson 45 direkt vom Entnahmetisch 44 entnommen und auf die Abstapelplätze 56 verteilt.

Da aufgrund der hohen Taktgeschwindigkeit der Plattenaufteilsäge 10 die Menge der auf den Entnahmetisch 44 während einer Zeiteinheit gelangenden fertig bearbeiteten Werkstücke 18b jedoch größer ist als die Menge, die die Bedienperson 45 während dieser Zeiteinheit auf die Abstapelplätze 56 verteilen kann, schiebt die Bedienperson 45 jene Werkstücke 18b, die in der zur Verfügung stehenden Zeiteinheit nicht auf die Abstapelplätze 56 verteilt werden können, auf den Puffertisch 46. Am Ende dieses Vorganges ist der Entnahmetisch 44 von aufgeteilten Werkstücken 18b frei, wohingegen auf dem Puffertisch 46 gegebenenfalls Werkstücke verbleiben.

Die Bedienperson 45 kann nun noch nicht fertig aufgeteilte

Zwischenwerkstücke drehen und am Winkellineal 50 anlegen, so dass diese von den beiden Vorschubeinrichtungen 20 und 28 gegriffen und im Rahmen des automatischen Vorganges auf den Auflagetisch 16 gezogen und dann der Sägelinie 12 zugeführt und dort aufgeteilt werden können. Während dieses automatisierten Vorganges können dann die auf dem Puffertisch 46 "geparkten" fertig bearbeiteten Werkstücke entnommen und auf die Abstapelplätze 56 verteilt werden, und so weiter.

Das oben beschriebene Verfahren funktioniert nicht nur mit einzelnen Werkstücken 18, sondern auch mit Paketen von Werkstücken, also mehreren aufeinanderliegenden Werkstücken.

Im Übrigen kann der Aufteilungsprozess noch weiter automatisiert werden, wenn, wie bei der Ausführungsform der Figur 2, zwei Einzel-Aufteilanlagen 10a und 10b über einen Querübergabebereich 74 miteinander verbunden werden. Bei einer solchen Plattenaufteilsäge 10 erfolgt eine Längsaufteilung durch eine die Einzel-Aufteilanlage 10a. Die an der Einzel-Aufteilanlage 10a ("Längssäge") aufgeteilten streifenförmigen Werkstücke 18a werden mittels dem Querübergabebereich 72 transportiert, durch die Ausrichteinrichtung 74 ausgerichtet und anschließend in der Einzel-Aufteileinrichtung 10b ("Quersäge") aufgeteilt.

Zu der Plattenaufteilsäge 10 gehört auch eine zwei Kameras 60 umfassende erste Erfassungseinrichtung 61, die unter anderem oberhalb vom Handlingbereich 58, also vom Entnahmetisch 44 und vom Puffertisch 46 und von den Abstapelplätzen 56 angeordnet sind, sowie oberhalb vom Vorschubbereich 38. Das Blickfeld der Kameras 60 ist auf den Zuführtisch 16, den Entnahmetisch 44, den Puffertisch 46, und die Abstapelplätze 56 und somit nicht nur auf einen Teilbereich der Plattenaufteilsäge 10, sondern im Grunde auf die gesamte Plattenaufteilsäge 10 und den sie umgebenden Bereich gerichtet.

Bei anderen und nicht gezeigten Ausführungsformen sind weniger oder mehr Kameras oder andere visuelle Erfassungseinrichtungen oder Kombination von unterschiedlichen visuellen Erfassungseinrichtungen vorhanden. Außerdem können die Kameras 60 auch an anderen Stellen der Plattenaufteilsäge 10 angeordnet sein, beispielsweise seitlich, vorne, hinten, unterhalb, am Druckbalken 14, den Vorschubeinrichtungen 20 und/oder 28, oder an mehreren von diesen Stellen.

Ferner gehört zu der Plattenaufteilsäge 10 noch ein nicht gezeigter Laserprojektor, der Informationen oder Anweisungen an die Bedienperson 45 auf Werkstücke 18b projizieren kann, die auf dem Entnahmetisch 44, dem Puffertisch 46 oder den Abstapelplätzen 56 liegen, sowie an beliebige andere Stellen der Plattenaufteilsäge 10 projizieren kann, die von einer Bedienperson 45 einsehbar sind. Anstelle des Laserprojektors oder zusätzlich zu dem Laserprojektor kann auch ein Beamer oder ein anderes Gerät zur Projektion von Informationen verwendet werden. Um das Risiko von Abschattungen zu vermeiden, können auch mehrere derartige Geräte an unterschiedlichen Stellen eingesetzt werden. Außerdem kann die Bedienperson 45 ein Headset bestehend aus Kopfhörer und Mikrofon tragen, welches zur Sprachausgabe an die Bedienperson 45 und von der Bedienperson 45 zur Spracheingabe benutzt werden kann. Zur taktilen Eingabe von Befehlen ist eine Tastatur 62 vorhanden, zur Anzeige von Informationen ein Bildschirm 64 mit einem nicht gezeigten Antrieb zur Änderung der Ausrichtung und Position des Bildschirms 64.

Die Kameras 60 der ersten Erfassungseinrichtung 61 erfassen Bilder. Zu der ersten Erfassungseinrichtung 61 gehört ferner ein berührungslose Ortungssystem 76 (z.B. mittels RFID), welches vorliegend mehrere Empfänger 78, von denen nur einer symbolisch dargestellt ist, an der Plattenaufteilanlage 10 und Transponder 80 bei der Bedienperson 45 umfasst. Mittels des Ortungssystems 76 können zusätzlich das Vorhandensein und die Identität der Bedienperson 45 erfasst und erkannt werden, so dass entsprechende Signale an eine Steuer- und Regeleinrichtung 66 weitergeleitet werden können. Entsprechend der festgestellten Identität der Bedienperson 45 können entsprechende Berechtigungen für die Maschinenbedienung und/oder für die Fehlerbehebung freigegeben werden, und es können automatisch bestimmte bedienerspezifische Einstellungen vorgenommen werden. Die erste Erfassungseinrichtung 61 kann beispielsweise Kameras 60 mit integrierter oder nachgeschalteter Bilderkennungs- und Bildauswertefunktion aufweisen.

Wie oben bereits angedeutet, umfasst die Plattenaufteilsäge 10 eine Steuer- und Regeleinrichtung 66, welche Informationen von zahlreichen Erfassungseinrichtungen erhält, beispielsweise von den Kameras 60, dem Ortungs- und Identitätssystem 76, der Tastatur 62 und dem Mikrofon, sowie von einer Vielzahl von Sensoren, beispielsweise Endschaltern, der Plattenaufteilsäge 10. Die Steuer- und Regeleinrichtung 66 verfügt über einen Speicher, auf dem ein Computerprogramm abgespeichert ist, mit dem ein Verfahren zum Betreiben der Plattenaufteilsäge 10 gesteuert werden kann.

Die Steuer- und Regeleinrichtung 66 verfügt über eine Bildverarbeitungs- und -auswerteeinrichtung, die ebenfalls zu der oben beschriebenen ersten Erfassungseinrichtung 61 gehört. Diese ermittelt anhand der von den Kameras 60 bereit gestellten Signale Größen, zu denen gehören: Vorhandensein von sicherheitsrelevanten Bauteilen; Beschädigungen an sicherheitsrelevanten Bauteilen und/oder an Werkstücken; Vorhandensein und Position von materialflussrelevanten Bauteilen; Beschädigungen an materialflussrelevanten Bauteilen; Vorhandensein, Identität, Größe, Position in einem Transport- und/oder Handlingbereich, eines Werkstücks; Betriebsgeräusch der Plattenbearbeitungsanlage.

Fehlen sicherheitsrelevante Bauteile, beispielsweise ein Element eines nicht gezeigten Lamellenvorhangs, der den Handlingbereich 58 von der Sägelinie 12 trennt, ist die Sicherheit der Bedienperson nicht mehr gewährleistet. Ein ungewöhnliches Betriebsgeräusch der Plattenaufteilsäge 10 schließlich ermöglicht einen Rückschluss darauf, ob die Plattenaufteilsäge 10 korrekt arbeitet oder nicht.

Die Plattenaufteilsäge 10 umfasst ferner noch eine zweite und bezüglich des Funktionsprinzips von der ersten Erfassungseinrichtung 61 unterschiedliche Erfassungseinrichtung, die in Figur 1 nur schematisch durch einen Kreis mit dem Bezugszeichen 70 dargestellt ist. Die zweite Erfassungseinrichtung 70 erfasst Zustände der Plattenaufteilsäge 10, beispielsweise mittels Informationen, die von Lagesensoren, Endschaltern, Wegaufnehmern, Leistungsmesseinrichtungen, etc. geliefert werden, und liefert entsprechende Signale an die Steuer- und Regeleinrichtung 66.

Aus den Signalen der ersten Erfassungseinrichtung 10 ermittelt die Steuer- und Regeleinrichtung 66 eine Situation, die aus einer Gruppe von vordefinierten Situationen ausgewählt ist. Die Gruppe kann beispielsweise folgende vordefinierten Situationen umfassen: (e) Eine Sicherheitseinrichtung der Plattenaufteilsäge 10 fehlt oder ist schadhaft. (f) Die Plattenaufteilsäge 10 ist defekt. (g) Es ist keine zum Bedienen der Plattenaufteilsäge (10) autorisierte Person anwesend; (h) ein Werkstück (18) befindet sich in einem Transportbereich (38) oder in einem Handlingbereich (58) in einer Soll-Position und es liegt keine Störungen des Materialflusses vor; (i) es liegt eine Kollisionssituation vor, beispielsweise weil sich ein Werkstück während des Transport verdreht hat; (j) es befindet sich ein störender Gegenstand im Transportbereich; (k) ein erfasstes Werkstück (18) ist beschädigt und muss entsorgt und nachproduziert werden; (I) eine Voraussetzung für eine Fortsetzung eines unterbrochenen Programmablaufs liegt nicht vor, beispielsweise, weil sich Teile und oder Baugruppen der Anlage nicht in einer vorgegebenen Position befinden, bzw. sie liegt vor, weil derartige Teile oder Baugruppen wieder in die gewünschte Position gebracht oder beschädigte oder störende Teile entsorgt worden sind, so dass der Betrieb fortgesetzt werden kann. Diese Aufzählung ist jedoch lediglich beispielhaft und keineswegs abschließend. Grundsätzlich sind noch weitere und fast beliebig definierbare Situationen denkbar, die im Betrieb der Plattenaufteilsäge 10 vorliegen können.

Insoweit kann man zusammenfassend sagen, dass der Vorschubbereich 38 und der Handlingbereich 58 der Plattenaufteilsäge 10 von der ersten Erfassungseinrichtung 61 selbstständig beobachtet werden. Durch die Steuer- und Regeleinrichtung 66 wird dabei eine Situation ausgewählt oder definiert, die unter Berücksichtigung der ermittelten Größe(n) mit der größten Wahrscheinlichkeit in oder bei der Plattenaufteilsäge 10 vorliegt. Es wird dann abhängig von der Situation von der Steuer- und Regeleinrichtung 66 entschieden, ob die definierte Situation eine Aktion rechtfertigt oder sogar erforderlich macht, und, wenn ja, welche Aktion erfolgen soll. Dabei ist es beispielsweise möglich, dass jeder Situation fest eine bestimmte Aktion oder eine Mehrzahl oder Sequenz von bestimmten Aktionen zugeordnet ist.

Zu den Aktionen kann gehören: (a) Anfahren des Betriebs der Plattenaufteilsäge 10; (b) Beschleunigen des Betriebs der Plattenaufteilsäge 10; (c) Verlangsamen des Betriebs der Plattenaufteilsäge 10; (d) Anhalten des Betriebs der Plattenaufteilsäge 10; (e) Ausgabe einer Warninformation, beispielsweise über einen Lautsprecher oder den oben erwähnten Beamer; (f) Ausgabe eines Alarms, beispielsweise in Form eines akustischen Warnsignals oder eine Blinkleuchte oder einer Anzeige auf dem Bildschirm 64; (g) Anpassen einer Geometrie der Plattenaufteilsäge 10, beispielsweise einer Anpassung der Arbeitshöhe der Entnahmetische 44 und/oder des Puffertisches 46 an die Größe der identifizierten Bedienperson; (i) Ausgabe einer Instruktion an die Bedienperson 45, bspw. zum Ausrichten eines Werkstücks 18; (j) Anpassen eines Programmablaufs, bspw. Entsorgen eines beschädigten Werkstücks und Nachproduzieren des entsorgten Werkstücks.

Das Verfahren zum Betreiben der Plattenaufteilsäge 10, mi dem der Betrieb der Plattenaufteilsäge 10 automatisch überwacht wird, wird nun unter Bezugnahme auf das Blockschaltbild der Figur 2 nochmals schematisch erläutert:

In einem Block 82 werden anhand der Signale der ersten Erfassungseinrichtung 61, insbesondere die Signale der Kameras 60 und des berührungslosen Ortungssystems 76 und der Mikrofone 68, durch die Steuer- und Regeleinrichtung 66 das Vorhandensein (Block 84), die Identität (Block 86), die aktuelle Position (Block 88), die aktuelle Bewegungsgeschwindigkeit (Block 90), die aktuelle Bewegungsrichtung (Block 92), das aktuelle Bewegungsmuster (Block 94), die aktuelle Beschleunigung (Block 96) und das aktuelle Geräusch (Block 98) der Bedienperson 45, das Vorhandensein (Block 100), die Identität (Block 102), die aktuelle Position (Block 104), die aktuelle Bewegungsgeschwindigkeit (Block 106), die aktuelle Bewegungsrichtung (Block 108), die aktuelle Beschleunigung (Block 110) sowie die aktuelle Größe (Block 112) des Werkstücks 18 ermittelt und die ermittelten Größen mit abgespeicherten Vergleichsgrößen für bestimmte als normal definierte Betriebssituationen und bestimmte als anormal definierte Betriebssituationen verglichen. Auch kann der Abarbeitungsgrad eines Schnittplans erfasst werden oder die Identität eines beschädigten Werkstücks 18.

Ferner wird anhand eines Bildvergleichs ermittelt, ob bestimmte sicherheitsrelevante Bauteile der Plattenaufteilsäge 10 vorhanden sind oder fehlen (Block 114) oder ob bestimmte sicherheitsrelevante Bauteile der Plattenaufteilsäge 10 beschädigt sind (Block 116). Schließlich wird auch das aktuelle Betriebsgeräusch der Plattenaufteilsäge 10 erfasst und mit vorher abgespeicherten Geräuschmustern verglichen, die im Normalbetrieb und bei bestimmten störungsbehafteten Betriebszuständen auftreten (Block 118).

Bei all den genannten Größen 74-118 handelt es sich um solche Größen, die für die Sicherheit einer im Handlingbereich 58 befindlichen Person und/oder den sicheren Betrieb der Plattenaufteilsäge 10 relevant sind. Dabei kann in bestimmten Fällen ein Vergleich einer einzelnen Größe mit einer entsprechenden Vergleichsgröße bereits ausreichen, um mit einer ausreichenden Wahrscheinlichkeit auf das Vorliegen einer bestimmten Situation zu schließen (Block 120). In anderen Fällen werden dagegen mehrere Größen mit den entsprechenden Vergleichsgrößen verglichen. Die Ergebnisse der Vergleiche können dann beispielsweise gewichtet werden, und hieraus können Wahrscheinlichkeiten für das Vorliegen bestimmter Situationen berechnet werden. Jene Situation mit der höchsten Wahrscheinlichkeit wird dann im nachfolgenden Block 120 ausgewählt.

In dem besagten Block 120 wird dann, wie gesagt, aus den ermittelten Größen und dem durchgeführten Vergleich auf das Vorliegen einer bestimmten Situation geschlossen, wobei hier beispielhaft auf eine vordefinierte und abgespeicherte Liste von möglichen Situationen zurückgegriffen wird. Zu diesen gehören: Die Bedienperson ist zum Bedienen der Plattenaufteilsäge 10 autorisiert, befindet sich in einem zulässigen Bereich der Plattenaufteilsäge 10 und ist handlungsfähig (Block 122). Es liegt eine Unfallsituation vor, beispielsweise ist die Bedienperson gestürzt und/oder verletzt (Block 124). Es befindet sich eine Person innerhalb eines gesperrten Bereichs, beispielsweise in der Nähe des Vorschubbereichs 38 (Block 126). Die erfasste Person ist nicht zum Bedienen der Plattenaufteilsäge 10 autorisiert (Block 128). Eine Sicherheitseinrichtung der Plattenaufteilsäge 10 fehlt oder ist schadhaft (Block 130). Die Plattenaufteilsäge 10 ist defekt oder steht kurz vor einem Defekt (Block 132). Es ist keinerlei Person anwesend (Block 134). Das Werkstück 18 im Vorschub- bzw. Transportbereich 38 oder im Handlingbereich 58 befindet sich in der vorgegebenen Soll-Position, und es liegen keine Störungen des Materialflusses vor (Block 136). Es liegt eine Kollisionssituation vor, beispielsweise hat ein Werkstück eine falsche Position bzw. falsche Lage in dem Transportbereich 38 (Block 138). Es befindet sich ein störender Gegenstand im Transportbereich 38 oder zumindest in dessen Nähe (Block 140). Das erfasste Werkstück 18 ist beschädigt und muss ersorgt und nachproduziert werden (Block 142). Eine Voraussetzung für die Fortsetzung des unterbrochenen Programmablauf liegt nicht vor: Ein Werkstück 18 und/oder materialflussrelevante Baugruppen der Plattenaufteilanlage 10 befinden sich nicht in der vorgegebenen Soll-Position (Block 144).

Ob tatsächlich eine der oben genannten Situationen vorliegt, wird im Block 120 anhand der Signale der zweiten Erfassungseinrichtung 70 überprüft. Beispielsweise kann anhand der Kameras 60 auf eine schadhafte Vorschubeinrichtung 20 geschlossen worden sein (Block 132), die entsprechenden und der ersten Vorschubeinrichtung 20 zugeordneten Endschalter der zweiten Erfassungseinrichtung 70 bestätigen dies jedoch nicht. In diesem Fall kann beispielsweise über den Bildschirm 64 eine Anfrage an die Bedienperson ausgegeben werden, in der um eine Überprüfung der Situation gebeten wird.

In einem Block 146 wird dann abhängig von der festgestellten Situation eine Aktion ausgelöst. Wiederum wird hierbei aus einer vordefinierten Liste von möglichen Aktionen ausgewählt. Wird beispielsweise die obige "Normalsituation" 122 festgestellt, kann der Betrieb der Plattenaufteilsäge gestartet werden ("Anfahren der Anlage", Block 148). Wird weiterhin das Vorliegen der Situation 122 festgestellt, kann der Betrieb der Aufteilsäge 10 beschleunigt werden (Block 150). Wird festgestellt, dass sich eine Person einem gesperrten Bereich befindet (Situation 126), wird der Betrieb der Plattenaufteilsäge 10 verlangsamt (Block 152) und eine Warninformation ausgegeben (Block 154). Wird dagegen festgestellt, dass die Bedienperson gestürzt oder verletzt ist (Situation 124), wird der Betrieb der Plattenaufteilsäge 10 augenblicklich gestoppt ("Anhalten der Anlage", Block 156) und gegebenenfalls auch ein Alarm ausgelöst (Block 158). Liegt die Situation vor, dass eine Sicherheitseinrichtung der Plattenaufteilsäge 10 fehlt oder schadhaft ist (Situation 130), wird ebenfalls eine Warninformation ausgegeben (Block 154) und gegebenenfalls der Betrieb der Plattenaufteilanlage 10 unmöglich gemacht bzw. gestoppt (Block 156). Ist die Plattenaufteilsäge 10 defekt oder steht kurz vor einem Defekt, oder ist beispielsweise ein Werkstück irgendwo verklemmt (Situation 132), wird ebenfalls der Betrieb der Plattenaufteilsäge 10 angehalten (Block 156) und es erfolgt ein Warn- bzw. Fehlerbehebungshinweis oder eine sonstige Instruktion an die Bedienperson (Block 154). Beispielsweise kann die Bedienperson 45 angewiesen werden, ein bestimmtes Werkstück 18 in der Plattenaufteilanlage 10 in eine bestimmte Position und/oder Ausrichtung zu bringen. Abhängig von der festgestellten Identität der Bedienperson kann auch einfach beispielsweise die Höhe des Entnahmetisches 44 angepasst werden (Block 160). Ferner kann dann, wenn festgestellt wird, dass nach einer Unterbrechung des Betriebs der Plattenaufteilanlage 10 gemäß Block 156 die dem zu Grunde liegende Störung (Blöcke 138-146) beseitigt wurde, der Betrieb der Plattenaufteilanlage wieder aufgenommen werden (Block 122), und es wird ermittelt und der Schnittplan so abgeändert, dass entsorgte Werkstücke 18 nachproduziert werden (Block 162).

## Patentansprüche

1. Verfahren zum Betreiben einer Plattenbearbeitungsanlage (10), bei dem mittels mindestens einer ersten Erfassungseinrichtung (61) ein Beobachtungsbereich (38, 58) der Plattenbearbeitungsanlage (10) beobachtet wird, wobei
• die erste Erfassungseinrichtung (61) Bilder erfasst und erkennt und/oder Geräusche erfasst;
• mittels der ersten Erfassungseinrichtung (61) eine Größe, die für den sicheren Betrieb der Plattenbearbeitungsanlage (10) relevant ist, ermittelt wird (82),
• mittels einer Auswerteeinrichtung (66) aus der ermittelten Größe auf das Vorliegen einer für die Sicherheit und die Zuverlässigkeit im Betrieb der Plattenbearbeitungsanlage (10) relevanten Situation geschlossen wird (120), und
• abhängig von der Situation von der Auswerteeinrichtung (66) entschieden wird, ob eine Aktion erfolgt (146) und, wenn ja, welche Aktion erfolgt,
• wobei die Größe, die für den sicheren Betrieb der Plattenbearbeitungsanlage (10) relevant ist und mittels der ersten Erfassungseinrichtung (61) ermittelt wird, mindestens eine aus der folgenden Gruppe ist:
- Vorhandensein (114) von sicherheitsrelevanten Bauteilen;
- Beschädigungen (116) an sicherheitsrelevanten Bauteilen;
- Vorhandensein und Position von materialflussrelevanten Bauteilen;
- Beschädigungen an materialflussrelevanten Bauteilen;
- Identität (102), Größe (112), Position (104) in einem Transport- und/oder Handlingbereich, eines Werkstücks (18);
- Betriebsgeräusch (118) der Plattenbearbeitungsanlage (10).

2. Verfahren nach einem der vorhergehenden Ansprüche, **dadurch gekennzeichnet, dass** die Aktion mindestens eine aus der folgenden Gruppe ist: Anfahren (148) der Anlage (10); Beschleunigen (150) der Anlage (10); Verlangsamen (152) der Anlage (10); Anhalten (156) der Anlage (10); Ausgabe (154) einer Warn- oder Fehlerbehebungsinformation oder eine sonstigen Instruktion, bspw. zum Ausrichten eines Werkstücks, an die Bedienperson (45); Ausgabe (158) eines Alarms; Anpassen (160) einer Maschinengeometrie; Anpassen (162) eines Programmablaufs, bspw. Entsorgen eines beschädigten Werkstücks und Nachproduzieren des entsorgten Werkstücks.

3. Verfahren nach einem der vorhergehenden Ansprüche, **dadurch gekennzeichnet, dass** das Vorliegen der Situation anhand mindestens einer zweiten und bezüglich des Funktionsprinzips von der ersten Erfassungseinrichtung unterschiedlichen Erfassungseinrichtung (70, 76) überprüft wird.

4. Verfahren nach Anspruch 3, **dadurch gekennzeichnet, dass** die zweite Erfassungseinrichtung (70) Maschinenzustände erfasst.

5. Verfahren nach einem der vorhergehenden Ansprüche, **dadurch gekennzeichnet, dass** die Situation aus einer Gruppe von vordefinierten Situationen ausgewählt ist, wobei die Gruppe mindestens umfasst: Sicherheitseinrichtung fehlt oder ist schadhaft (130); Plattenbearbeitungsanlage ist defekt (132); ein Werkstück (18) befindet sich in einem Transportbereich (38) oder in einem Handlingbereich (58) in einer Soll-Position und es liegt keine Störungen des Materialflusses vor (136); es liegt eine Kollisionssituation vor (138); es befindet sich ein störender Gegenstand im Transportbereich (140); ein erfasstes Werkstück (18) ist beschädigt und muss entsorgt und nachproduziert werden (142); eine Voraussetzung für eine Fortsetzung eines unterbrochenen Programmablaufs liegt vor oder liegt nicht vor (144).

6. Plattenbearbeitungsanlage (10), mit mindestens einer ersten Erfassungseinrichtung (61) zum Beobachten eines Beobachtungsbereichs (38, 58) der Plattenbearbeitungsanlage (10), **dadurch gekennzeichnet, dass** sie eine Steuer- und/oder Regeleinrichtung (66) aufweist, die zur Ausführung eines Verfahrens nach einem der vorhergehenden Ansprüche programmiert ist.

## Claims

1. Method for operating a plate processing plant (10), in which an observation area (38, 58) of the plate processing plant (10) is observed by means of at least one first detection device (61), wherein
• the first detection device (61) acquires and recognizes images and/or detects sounds;
• by means of the first detection device (61) a variable relevant to the safe operation of the plate processing plant (10) is determined (82),
• by means of an evaluation device (66) the existence of a situation relevant to safety and reliability in the operation of the plate processing plant (10) is concluded (120) from the determined variable, and
• depending on the situation, the evaluation device (66) decides whether an action is to be taken (146) and, if so, which action is to be taken,
• wherein the variable which is relevant for the safe operation of the plate processing plant (10) and is determined by means of the first detection device (61) is at least one of the following group:
- presence (114) of safety-relevant components;
- damage (116) to safety-relevant components;
- presence and position of material flow relevant components;
- damage to material flow relevant components;
- identity (102), size (112), position (104) in a transport and/or handling area of a work piece (18) ;
- operating noise (118) of the panel processing system (10).

2. Method according to one of the preceding claims, **characterized in that** the action is at least one of the following group: starting (148) of the plant (10); acceleration (150) of the plant (10); deceleration (152) of the plant (10); stopping (156) of the plant (10); output (154) of a warning or troubleshooting information or other instruction, e.g. for aligning a work piece, to the operator (45); output (158) of an alarm; adaptation (160) of a machine geometry; adaptation (162) of a program sequence, e.g. disposal of a damaged work piece and post-production of the disposed work piece.

3. Method according to one of the preceding claims, **characterized in that** the existence of the situation is checked by means of at least a second detection device (70, 76) which is different from the first detection device with respect to the operating principle.

4. Method according to claim 3, **characterized in that** the second detection device (70) detects machine states.

5. Method according to one of the preceding claims, **characterized in that** the situation is selected from a group of predefined situations, said group comprising at least
Safety device missing or defective (130);
plate processing plant is defective (132); a work piece (18) is in a transport area (38) or in a handling area (58) in a desired position and there are no disturbances of the material flow (136); a collision situation exists (138); a disturbing object is in the transport area (140); a detected work piece (18) is damaged and must be disposed of and re-produced (142); a prerequisite for a continuation of an interrupted program sequence exists or does not exist (144).

6. Plate processing plant (10), having at least one first detection device (61) for observing an observation area (38, 58) of the plate processing plant (10), **characterized in that** it has a control and/or regulating device (66) which is programmed to execute a method according to one of the preceding claims.

## Revendications

1. Procédé pour faire fonctionner une installation d'usinage de panneaux (10), selon lequel une zone d'observation (38, 58) de l'installation d'usinage de panneaux (10) est observée au moyen d'au moins un premier dispositif de détection (61), dans lequel
• le premier dispositif de détection (61) détecte et reconnaît des images et/ou détecte des bruits;
• une grandeur, qui est essentielle au fonctionnement en toute sécurité de l'installation d'usinage de panneaux (10), est déterminée (82) au moyen du premier dispositif de détection (61),
• la présence d'une situation essentielle à la sécurité et la fiabilité pendant le fonctionnement de l'installation d'usinage de panneaux (10) est déduite (120) de la grandeur déterminée au moyen d'un dispositif d'évaluation (66), et
• en fonction de la situation du dispositif d'évaluation (66), il est décidé si une action s'effectue (146) et, si oui, quelle action s'effectue,
• dans lequel la grandeur qui est essentielle au fonctionnement en toute sécurité de l'installation d'usinage de panneaux (10) et est déterminée au moyen du premier dispositif de détection (61) est au moins une du groupe suivant:
- la présence (114) d'éléments essentiels à la sécurité;
- des détériorations (116) sur des éléments essentiels à la sécurité;
- la présence et la position d'éléments essentiels au flux de matière;
- des détériorations sur des éléments essentiels au flux de matière;
- l'identité (102), la grandeur (112), la position (104) dans une zone de transport et/ou de manipulation, d'une pièce (18);
- un bruit de fonctionnement (118) de l'installation d'usinage de panneaux (10).

2. Procédé selon l'une quelconque des revendications précédentes, **caractérisé en ce que** l'action est au moins une du groupe suivant: le démarrage (148) de l'installation (10); l'accélération (150) de l'installation (10); le ralentissement (152) de l'installation (10); l'arrêt (156) de l'installation (10); la délivrance (154) d'une information d'avertissement ou de suppression des défaillances ou une autre instruction, par exemple pour orienter une pièce, à l'opérateur (45); l'émission (158) d'une alarme; l'adaptation (160) d'une géométrie de machine; l'adaptation (162) d'un déroulement de programme, par exemple l'élimination d'une pièce détériorée et la nouvelle production de la pièce éliminée.

3. Procédé selon l'une quelconque des revendications précédentes, **caractérisé en ce que** la présence de la situation est vérifiée à l'aide d'au moins un deuxième dispositif de détection (70, 76) et différent du premier dispositif de détection du point de vue du principe de fonctionnement.

4. Procédé selon la revendication 3, **caractérisé en ce que** le deuxième dispositif de détection (70) détecte des états de machine.

5. Procédé selon l'une quelconque des revendications précédentes, **caractérisé en ce que** la situation est sélectionnée dans un groupe de situations prédéfinies, dans lequel le groupe comprend au moins:
le dispositif de sécurité est absent ou endommagé (130);
l'installation d'usinage de panneaux est défectueuse (132); une pièce (18) se trouve dans une zone de transport (38) ou dans une zone de manipulation (58) dans une position théorique et aucune perturbation du flux de matière n'est présente (136); une situation de collision est présente (138); un objet gênant se trouve dans la zone de transport (140); une pièce (18) détectée est détériorée et nécessite d'être éliminée et à nouveau produite (142); une condition requise pour une poursuite d'un déroulement de programme interrompu est présente ou n'est pas présente (144).

6. Installation d'usinage de panneaux (10), avec au moins un premier dispositif de détection (61) pour observer une zone d'observation (38, 58) de l'installation d'usinage de panneaux (10), **caractérisée en ce qu'**elle présente un dispositif de commande et/ou de réglage (66), qui est programmé pour exécuter un procédé selon l'une quelconque des revendications précédentes.
